Europäisches Patentamt

European Patent Office

Office européen des brevets

(11) Veröffentlichungsnummer: **0 457 088 B1**

# EUROPÄISCHE PATENTSCHRIFT

(45) Veröffentlichungstag der Patentschrift: **02.11.94**

(51) Int. Cl.5: **C08K 5/10**, C08K 5/09, C08K 5/01, C08L 75/04

(21) Anmeldenummer: **91106890.6**

(22) Anmeldetag: **27.04.91**

(54) **Verarbeitung von Polyurethankautschuken.**

(30) Priorität: **12.05.90 DE 4015297**

(43) Veröffentlichungstag der Anmeldung:
**21.11.91 Patentblatt 91/47**

(45) Bekanntmachung des Hinweises auf die Patenterteilung:
**02.11.94 Patentblatt 94/44**

(84) Benannte Vertragsstaaten:
**DE ES FR GB IT**

(56) Entgegenhaltungen:
**DE-B- 1 200 795**
**US-A- 3 402 135**
**US-A- 3 933 705**

(73) Patentinhaber: **RHEIN-CHEMIE RHEINAU GmbH Düsseldorfer Strasse 23-27 D-68219 Mannheim (DE)**

(72) Erfinder: **Ehrend, Helfried, Dipl.-Ing. Leharstrasse 17 W-6720 Speyer (DE)**

(74) Vertreter: **Gremm, Joachim, Dr. Bayer AG Konzernverwaltung RP Patente Konzern D-51368 Leverkusen (DE)**

**Beschreibung**

Aufgrund ihrer hervorragenden Verschleißfestigkeit und sehr guten Quellbeständigkeit in Ölen gewinnen Gummiartikel aus walzbaren Polyurethanen in der Kautschukindustrie Interesse, Elastomere Polyurethane oder Polyurethankautschuke sind seit langem bekannt. Sie stellen Segmentpolymere mit Weichsegmenten (Polyether, Polyester) mit verhältnismäßig hohem Molekulargewicht (beispielsweise 1000 bis 4000) und Hartsegmenten (Polyurethan oder Polyharnstoff) dar. Die Vernetzung dieser Kautschuke unter Bildung von Gummi mit Isocyanat, Peroxid oder Schwefel erzeugt im allgemeinen eine Verbindung oder Quervernetzung zwischen den Hartsegmenten, während die meist unverzweigten Weichsegmente die elastischen Eigenschaften beisteuern,

Polyurethankautschuke können, wie z.B. Naturkautschuk oder übliche synthetische Dienkautschuke auf Walzwerken oder in Innenmischern, verarbeitet werden, In dem ersten Verarbeitungsschritt wird im allgemeinen eine Kautschukmischung hergestellt, d.h. dem Polyurethankautschuk, Ruß, Füllstoffe, Vernetzungsmittel u.a. Hilfsstoffe zugefügt. Hierbei und auch bei der anschließenden Herstellung von Formteilen aus der Kautschukmischung, z.B. durch Extrusion und bei der späteren Vernetzung beobachtet man eine starke Neigung zum Kleben und schlechte Fließeigenschaften.

Der Erfindung liegt die Erkenntnis zugrunde, daß ein Zusatz von 1 bis 10 Gew.-%, bevorzugt 2 bis 5 Gew.-%, bezogen auf Polyurethankautschuk eines Fettsäureesters des Pentaerythrits oder eines Gemischs eines Alkans mit einer Fettsäure zu der Polyurethankautschukmischung die Klebeneigung beseitigt und die Fließeigenschaften entscheidend verbessert, Damit wird nicht nur die Herstellung von vernetzten Gummiartikeln aus den Polyurethankautschuken erleichtert, sondern in vielen Fällen wird die Herstellung solcher Artikel überhaupt erst möglich. Dies gilt besonders für kleine Gegenstände mit komplizierten Formen wie etwa komplizierte Dichtungen.

Polyurethankautschuke sind seit langem bekannt und werden industriell angewendet. Wie oben gesagt, handelt es sich um Segmentpolymerisate mit Weichsegmenten eines Molekulargewichts von beispielsweise 1000 bis 4000 die aliphatische Polyester oder Polyether darstellen und mit Hartsegmenten die Urethan oder Harnstoffgruppen enthalten. Solche Produkte können hergestellt werden durch Umsetzung eines Hydroxylendgruppen-enthaltenden Polyesters oder Polyethers mit einem Überschuß eines Diisocyanats, wobei sich ein Präpolymer mit NCO-Endgruppen bildet und nachfolgende Umsetzung mit einem kurzkettigen Diol oder Diamin, unter Kettenverlängerung. Zum Beispiel entsteht ein geeigneter Polyurethankautschuk aus einem Mischester aus Adipinsäure mit Ethylenglykol und Propylenglykol mit OH-Endgruppen und einem Molekulargewicht von ca. 2000 durch Umsetzung mit einem Überschuß Toluylendiisocyanat oder 4,4-Diphenylmethandiisocyanat zum NCO-Präpolymeren und anschließende Umsetzung mit Butandiol zur Kettenverlängerung.

Die Polyurethankautschuke werden in Polyurethankautschukmischungen überführt, nach den gleichen Methoden, die man für Naturkautschuk oder synthetische Dienkautschuke anwendet. Weitere Bestandteile der Kautschukmischungen sind im wesentlichen Füllstoffe, bevorzugt Ruße und das Vernetzungsmittel. Im Falle von Polyurethankautschuken kann dies ein Diisocyanat, ein Peroxid oder Schwefel sein. Bei der Schwefelvernetzung oder Vulkanisation ist natürlich auch ein üblicher Vulkanisetionsbeschleuniger erforderlich.

Als erfindungsgemäßes Additiv zur Verbesserung der Verarbeitungseigenschaften dienen Ester des Pentaerythrits mit aliphatischen Fettsäuren, bevorzugt gesättigten aliphatischen Fettsäuren mit 6 bis 24 Kohlenstoffatomen, besonders geeignet ist Pentaerythrittetrastearat. Neben der Stearinsäure für das Pentaerythrittetrastearat können auch andere entsprechende Fettsäuren Verwendung finden, wie z.B. Pentaerythrittetrapalmitat, Pentaerythrittetralaurinat u.a.. Außer den Tetraestern ist auch der Einsatz entsprechender Mono-, Di- und Triester der genannten u.ä. Fettsäuren möglich, wie diesbezügliche Mischester, Statt der Pentaerythritester kann man auch ein Gemisch aus den freien Fettsäuren, bevorzugt gesättigten aliphatischen Fettsäuren mit 6 bis 24 C-Atomen, besonders bevorzugt mit 16 bis 18 C-Atomen mit Alkanen einsetzen. Als Alkane sind insbesondere Isoalkane mit einer Kettenlänge von 20 bis 60 C-Atomen, vorzugsweise 35 bis 50 C-Atomen geeignet. Das Gewichtsverhältnis von Alkan und Fettsäure in diesem Gemisch ist 95 zu 5 bis 20 zu 80, bevorzugt um etwa 70 zu 30.

Die Pentaerythritester oder Alkanfettsäuregemische können direkt bei der Mischungsherstellung eingearbeitet werden, erfordern also keinen besonderen Arbeitsgang. Durch diesen Zusatz wird das Kleben der Polyurethankautschukmischung herabgesetzt und ebenfalls die Viskosität der Mischung, so daß bei der Herstellung von Formkörpern durch Spritzgießen höhere Einspritzvolumina und Einspritzgeschwindigkeiten erreicht werden. Gleichzeitig wird eine einwandfreie Entformung erzielt. Die sonstigen Eigenschaften der vernetzten Kautschuke werden nicht verändert.

In den folgenden Beispielen sind einige Kautschukmischungen und ihre Eigenschaften tabellarisch angegeben. Die Mischungen wurden in üblicher Weise auf Walzenstühlen durch Vermischung der Bestandteile hergestellt. Zur Messung diente ein Hochdruckkapillarrheometer und ein Rheovulkameter, deren Zweck und Arbeitsweise im folgenden kurz beschrieben werden. Die nachstehenden Beispiele zeigen, daß die Mischungviskosität durch den Zusatz von Pentaerythrittetrastearat bzw. das Alkan-Fettsäuregemisch deutlich gesenkt wird und die Einspritzvolumina und Einspritzgeschwindigkeiten in die Vulkanisierform deutlich erhöht werden. Hieraus resultiert eine erhebliche Verbesserung der wirtschaftlichen Fertigung von Polyurethan-Formartikeln.

Hochdruckkapillarrheometer (HKR)

Das Gerät dient zur Prüfung der rheologischen Eigenschaften von Kautschuk- und Kunststoffmischungen.

Kurzbeschreibung der Messung:

Das zu prüfende Material wird in einen Zylinder eingefüllt und unter definierten Bedingungen mittels eines Kolbens durch eine Düse gepreßt.

| Als Parameter vorgegeben sind: | Gemessen werden: |
|---|---|
| Prüftemperatur ($^\circ$C) und Kolbengeschwindigkeit (mm/s) | Massetemp. ($^\circ$C)<br>Massedruck (bar)<br>Prüfzeit (Min.) |

Ein Rechner ermittelt zusätzlich

| scheinbare Schergeschwindigkeit: | ap ($s^{-1}$) |
|---|---|
| Schubspannung: | (Pa) |
| scheinbare Viskosität: | nap (Pa.s) |
| Fließexponent: | m |
| korrigierte Schergeschwindigkeit: | ($s^{-1}$) |
| korrigierte Viskosität: | (Pa.s) |
| Normalspannungskoeffizient: | (Pa.s$^2$) |
| Normalspannungsdifferenz: | (Pa) |
| Spritzquellung | |

Rheovulkameter

Das Gerät dient zur Prüfung des Verarbeitungsverhaltens von Kautschukmischungen (injection moulding).

Kurzbeschreibung der Messung:

Eine exakt gewogene Mischungsprobe wird in einen Vorratsraum eingelegt und mittels eines Kolbens durch eine Düse in eine beheizte Prüfform eingespritzt.

| Gemessen werden: | Folgende Parameter werden vorgegeben: |
|---|---|
| Spritzvolumen (cm$^3$) Spritzgeschwindigkeit (cm$^3$/s) | Spritzdruck (bar)<br>Vorwärmtemperatur (°C)<br>Vordruckzeit (s)<br>Vorwärmzeit (s)<br>Einspritzzeit (s)<br>Vulkanisationstemperatur (°C)<br>Vulkanisationszeit (min) |

## Beispiel 1

| Mischung | A[+] | B | C |
|---|---|---|---|
| Polyurethankautschuk* | 100 | 100 | 100 Gew.-Tle. |
| Stearinsäure | 0,5 | 0,5 | 0,5 |
| Polycarbodiimid-Gemisch | 6 | 6 | 6 |
| Ruß N-330 | 20 | 20 | 20 |
| 2,4-Toluylendiisocyanat | 10 | 10 | 10 |
| Pb-Phenylethyldithiocarbamat | 0,3 | 0,3 | 0,3 |
| Pentaerythrittetrastearat | - | 3 | - |
| Alkan/Fettsäure-Gemisch (70:30) | - | - | 3 |

Mischungsviskosität mit Hochdruck-Kapillarrheometer
$\eta \times 10^3$ (Pa.s)

| bei γ | | | | |
|---|---|---|---|---|
| 11 | | 30 | 23,8 | 18,1 |
| 65 | | 8,1 | 6,3 | 5,6 |
| 112 | | 5,6 | 4,3 | 3,9 |
| 338 | | 2,4 | 1,9 | 1,8 |
| 675 | | 1,4 | 1,1 | 1,1 |

Messung im Rheovulkameter (Injection Moulding)
Einspritzbedingungen 25 s/65 bar/135° C

| | | | |
|---|---|---|---|
| Volumen ($cm^3$) | 1,01 | 1,53 | 1,78 |
| Geschwindigkeit ($cm^3$/s) | 0,042 | 0,061 | 0,072 |

Vulkanisatdaten (10 min/135° C)

| | | | |
|---|---|---|---|
| Härte (ShA) | 80 | 81 | 80 |
| Elastizität (%) | 41 | 41 | 41 |
| Zugfestigkeit (MPa) | 30,5 | 33,1 | 32,8 |
| Bruchdehnung (%) | 605 | 610 | 605 |

Druckverformungsrest

| | | | |
|---|---|---|---|
| nach 24 h/100° C (%) | 41 | 40 | 37 |
| nach 24 h/125° C (%) | 51 | 42 | 46 |

* aus Adipinsäure-Ethylenglykol/Propylenglykol-

Mischester, Toluylendiisocyanat und Butandiol

(Urepan 600 der Bayer AG)

[+] nicht erfindungsgemäß

## Beispiel 2

| Mischung | +<br>D | E | F |
|---|---|---|---|
| Polyurethankautschuk* | 100 | 100 | 100 Gew.-Tle. |
| Polycarbodiimid-Gemisch | 5 | 5 | 5 |
| Ruß N-550 | 20 | 20 | 20 |
| Triallylcyanurat | 2 | 2 | 2 |
| Di-tert.-butylperoxybenzol | 7 | 7 | 7 |
| Pentaerythrittetrastearat | - | 3 | - |
| Alkan/Fettsäure-Gemisch (70:30) | - | - | 3 |

Mischungsviskosität mit Hochdruck-Kapillarrheometer
$\eta \times 10^3$ (Pa.s)

| bei $\gamma$ | 11 | 36,9 | 31,2 | 32 |
|---|---|---|---|---|
| | 65 | 8,9 | 4 | 4,3 |
| | 112 | 6,1 | 3,2 | 3,3 |
| | 338 | 2,6 | 2,2 | 2,2 |
| | 675 | 1,6 | 1,6 | 1,6 |

Messung im Rheovulkameter (Injection Moulding)
Einspritzbedingungen 20 s/65 bar/5 min

| | | | |
|---|---|---|---|
| Volumen (cm³) | 0,4 | 2,07 | 2,4 |
| Geschwindigkeit (cm³/s) | 0,02 | 0,1 | 0,12 |

Vulkanisatdaten (30 min/160° C)

| | | | |
|---|---|---|---|
| Härte (ShA) | 75 | 74 | 72 |
| Elastizität (%) | 39 | 38 | 37 |
| Zugfestigkeit (MPa) | 24 | 23,9 | 25 |
| Bruchdehnung (%) | 215 | 255 | 280 |

Druckverformungsrest

| | | | |
|---|---|---|---|
| nach 24 h/100° C (%) | 3 | 3 | 3 |
| nach 24 h/125° C (%) | 9 | 9 | 9 |

* aus Adipinsäure-Ethylenglykol/Propylenglykol-

Mischester, 4,4'-Diphenylmethandiisocyanat und

Butandiol (Urepan 640 der Bayer AG)

+ nicht erfindungsgemäß

## Beispiel 3

| Mischung | G + | H | I |
|---|---|---|---|
| Polyurethankautschuk* | 100 | 100 | 100 |
| Zn-Stearat | 0,25 | 0,25 | 0,25 |
| Ruß N-330 | 20 | 20 | 20 |
| Polycarbodiimid-Gemisch | 4 | 4 | 4 |
| Mercaptobenzthiazol (80 %) | 3 | 3 | 3 |
| Mercaptobenzthiazoldisulfid (80 %) | 5 | 5 | 5 |
| Schwefel | 1,75 | 1,75 | 1,75 |
| Zn-chlorid-Mercapto-Komplex | 0,85 | 0,85 | 0,85 |
| Pentaerythrittetrastearat | - | 3 | - |
| Alkan/Fettsäure-Gemisch (70:30) | - | - | 3 |

Mischungsviskosität mit Hochdruck-Kapillarrheometer

$$\eta \times 10^3 \ (Pa.s)$$

| bei $\gamma$ | | | |
|---|---|---|---|
| 11 | 38 | 33,5 | 19,4 |
| 65 | 10,3 | 7,2 | 8,3 |
| 112 | 6,9 | 5,5 | 6,2 |
| 338 | 3,1 | 3,1 | 3,1 |
| 675 | 1,9 | 1,9 | 1,9 |

Messung im Rheovulkameter (Injection Moulding)
Einspritzbedingungen 25 s/65 bar/160°C

| | | | |
|---|---|---|---|
| Volumen (cm³) | 0,65 | 1,88 | 1,59 |
| Geschwindigkeit (cm³/s) | 0,026 | 0,077 | 0,063 |

Druckverformungsrest

| | | | |
|---|---|---|---|
| nach 24 h/100°C (%) | 19 | 18 | 18 |
| nach 24 h/125°C (%) | 32 | 31 | 32 |

\* Polyadditionsprodukt aus Toluylendiisocyanat und Polyester der Bayer AG (Urepan 0359)

+ nicht erfindungsgemäß

## Patentansprüche

1. Polyurethankautschukmischung enthaltend 1 bis 10 Gew.-% bezogen auf Polyurethan eines Fettsäureesters des Pentaerythrits oder eines Gemischs aus einem Alkan und einer gesättigten Fettsäure.

2. Verwendung eines Zusatzes von 1 bis 10 Gew.-% eines Fettsäureesters des Pentaerythrits oder eines Gemischs aus einem Alkan mit einer gesättigten Fettsäure bezogen auf Polyurethan zur Verbesserung der Verarbeitbarkeit von Polyurethankautschukmischungen.

**Claims**

1.  A polyurethane rubber mixture containing 1 to 10% by weight, based on polyurethane, of a fatty acid ester of pentaerythritol or a mixture of an alkane and a saturated fatty acid.

2.  The use of an addition of 1 to 10% by weight, based on polyurethane, of a fatty acid ester of pentaerythritol or a mixture of an alkane with a saturated fatty acid for improving the processability of polyurethane rubber mixtures.

**Revendications**

1.  Mélange de caoutchouc de polyuréthannes qui contient 1 à 10 % en poids par rapport au polyuréthanne un ester d'acide gras du pentaérythritol ou un mélange d'un alcane et d'un acide gras saturé.

2.  Utilisation d'une addition de 1 à 10% en poids d'un ester d'acide gras du pentaérythritol ou d'un mélange d'un alcane et d'un acide gras saturé par rapport au polyuréthanne pour améliorer l'aptitude à la transformation de mélanges de caoutchoucs de polyuréthannes.